# FASCICULE DE BREVET EUROPEEN

(11) **EP 4 315 367 B1**
(45) Date de publication et mention de la délivrance du brevet: **12.02.2025**
(21) Numéro de dépôt: 22718716.8
(22) Date de dépôt: 29.03.2022
(51) Int. Cl.: G21C 19/20, G21C 13/032, G21C 13/036

(54) **MÉTHODE DE MAINTENANCE D'UN RÉACTEUR NUCLÉAIRE**
VERFAHREN ZUR WARTUNG EINES KERNREAKTORS
METHOD FOR MAINTAINING A NUCLEAR REACTOR

(30) Priorité: 31.03.2021 FR 2103357
(43) Date de publication de la demande: 07.02.2024
(73) Titulaire: Framatome, 92400 Courbevoie (FR)
(72) Inventeur: DUPUIS, Alexandre, 59169 CANTIN (FR); SZCZUREK, Eddy, 59530 LE QUESNOY (FR); LALLIER, Mickael, 59740 CLAIRFAYTS (FR)
(74) Mandataire: Lavoix
(86) Numéro de dépôt international: PCT/EP2022/058234
(87) Numéro de publication internationale: WO 2022/207624

(56) Documents cités:
- CN-A- 110 060 790
- FR-A1- 3 032 058
- KIYOSHI TAKANABE ET AL: "Development of advanced CRDM without canopy seal welds", NUCLEAR ENGINEERING AND DESIGN, 1 January 2002 (2002-01-01), pages 25 - 34, XP055340792, Retrieved from the Internet <URL:http://www.sciencedirect.com/science/article/pii/S0029549302000110/pdfft?md5=2dc28e382043eac6bddb2f4a5f531fb8&pid=1-s2.0-S0029549302000110-main.pdf> [retrieved on 20211116], DOI: 10.1016/S0029-5493(02)00011-0

## Description

La présente invention concerne la maintenance des mécanismes de commande des grappes de contrôle d'un réacteur nucléaire.

Un réacteur nucléaire comporte typiquement une cuve sous pression, dans laquelle sont disposés des assemblages de combustible nucléaire constituant le coeur du réacteur nucléaire. La réactivité du coeur est contrôlée, entre autres, en enfonçant dans le coeur des grappes de contrôle, chaque grappe comprenant plusieurs crayons en un matériau absorbant les neutrons.

Chaque grappe de commande est fixée au bout d'une tige de commande, elle-même déplacée par un Mécanisme de Commande de Grappe (MCG).

Les Mécanismes de Commande de Grappes (MCG) assurent chacun l'extraction, le maintien ou l'insertion d'une grappe de contrôle dans le coeur du réacteur. Ils doivent également autoriser la chute libre des tiges de commande de grappe à l'ouverture des disjoncteurs d'arrêt automatique du réacteur.

Le réacteur nucléaire comprend ainsi une pluralité d'ensembles de commande, chacun dédié à une grappe de contrôle. Chaque ensemble de commande comprend un adaptateur solidaire du couvercle de la cuve sous pression, un carter de réception d'un mécanisme de levée de la tige de commande de la grappe de commande et d'une gaine de réception de la tige de commande. Le carter, le mécanisme de levée et la gaine constituent le MCG.

L'adaptateur traverse le couvercle de cuve et est rigidement fixé à celui-ci. Il délimite un passage à travers lequel se déplace la tige de commande.

Le mécanisme de levée est généralement appelé ensemble mécanisme de levée (EML). Ce mécanisme est un actionneur ayant pour fonction le contrôle, l'insertion ou l'extraction de la tige de commande des grappes de contrôle dans le coeur du réacteur.

Le carter et la gaine forment ensemble une enceinte sous pression, en communication fluidique avec l'intérieur de la cuve sous pression à travers l'adaptateur.

Le carter présente une extrémité inférieure de carter typiquement vissée sur une extrémité supérieure de l'adaptateur. L'étanchéité entre l'extrémité inférieure du carter et l'extrémité supérieure de l'adaptateur est réalisée par un joint soudé, appelé fréquemment joint « Canopy ».

La gaine constitue l'extrémité supérieure de l'enceinte sous pression. Elle délimite un volume interne dans lequel la tige de commande vient se loger en position haute de la grappe de commande. Ce volume interne est fermé vers le haut et communique avec le volume interne du carter vers le bas.

De manière à créer une liaison étanche entre la gaine et le carter, il est possible de prévoir une première lèvre à une extrémité supérieure du carter et une seconde lèvre à une extrémité inférieure de la gaine. La première lèvre et la seconde lèvre sont soudées l'une à l'autre de manière étanche et forment un joint connu sous le nom de joint « Oméga ».

L'EML étant composé de pièces mobiles effectuant la préhension et le déplacement de la tige de commande, il est soumis à des phénomènes d'usure qui rendent nécessaire son remplacement après plusieurs millions de cycles.

Dans la plupart des cas, les remplacements concernent des mécanismes de commande de grappes (MCG) qui arrivent en limite de leur durée de vie. Ponctuellement, les MCG peuvent être remplacés pour des raisons de dysfonctionnement.

Une solution pour le remplacement d'un mécanisme de commande de grappe (RMCG) sur site est le remplacement de la totalité du MCG en intervenant au niveau du joint « Canopy ». Cette opération prévoit le remplacement de l'EML (Ensemble mécanisme de levée) et de l'enceinte sous pression (gaine + carter).

La solution RMCG « Canopy » peut comporter les opérations suivantes :
- Découpe du joint « Canopy » (localisé entre le carter et l'adaptateur du couvercle),
- Dépose du MCG dans sa totalité,
- Usinage de l'adaptateur afin de restaurer un profil soudable,
- Repose d'un MCG neuf (avec éventuel ajustement pour appairage avec l'adaptateur),
- Reconstitution du joint soudé « Canopy »,
- Requalifications associées.

Une autre solution pourrait être d'intervenir au niveau du joint « Oméga » par découpe dans l'axe de la soudure d'origine.

La solution RMCG « Oméga » pourrait comporter les opérations suivantes :
- Découpe du joint « Oméga » (localisé entre la gaine et le carter du MCG) dans l'axe de la soudure afin de préserver la conception initiale du joint soudé (découpe verticale),
- Dépose de la gaine et de l'EML,
- Usinage de la lèvre du carter en vue de restaurer un profil soudable, identique au profil initial,
- Repose d'un EML neuf et d'une gaine neuve ou de la gaine d'origine réusinée sur place,
- Soudage du joint « Oméga » à l'identique de la conception initiale,
- Requalifications associées.

Ces solutions ne sont pas pleinement satisfaisantes.

La solution RMCG « Canopy » impose :
- Le remplacement du MCG complet incluant l'enceinte sous pression (gaine + carter),
- La dépose / repose du calorifuge du couvercle, ce qui a un impact sur le planning de l'opération.

La RMCG « Oméga », avec découpe verticale du joint soudé, n'est pas non plus satisfaisante sur les points suivants.

Des essais de remplacements d'EML ont été effectués en intervenant au niveau du joint « Oméga ».

Après découpe dans l'axe de la soudure du joint « Oméga » (découpe verticale), un ressuage a été réalisé pour s'assurer d'un état de surface exempt de défaut. Sur un ensemble de plus de50 MCG découpés, 38% des ressuages montrent des défauts de surface non conformes dans les lèvres minces.

La présence aléatoire et imprévisible de ces défauts ne permet pas de préparer un chantier avec une maîtrise suffisante. Ces défauts appellent des réparations et des justifications systématiques. Dans la majorité des cas, ils pourraient même ne pas s'avérer réparables ou alors au prix du développement de procédés complexes.

En secours, une intervention au niveau du joint « Canopy » serait alors nécessaire.

Les documents pertinents de l'art antérieur sont, par exemple, les suivants :
- Kiyoshi Takanabe ET AL: "Development of advanced CRDM without canopy seal welds",Nuclear Engineering and Design (2002-01-01), pages 25-34, XP055340792,DOI: 10.1016/ S0029-5493(02)00011-0 ,
- CN 110 060 790 A (2019-07-26), et
- FR 3 032 058 A1 (2016-07-29).

Dans ce contexte, l'invention vise à proposer une méthode de maintenance d'un réacteur nucléaire permettant d'assurer la maintenance d'un ensemble de commande de grappe de manière fiable et économique.

A cette fin, l'invention porte sur une méthode de maintenance d'un réacteur nucléaire, le réacteur nucléaire comprenant au moins un ensemble de commande d'une grappe de contrôle, le ou chaque ensemble de commande comprenant un adaptateur solidaire d'un couvercle d'une cuve sous pression du réacteur nucléaire, un carter de réception d'un mécanisme de levée d'une tige de commande de la grappe de contrôle et une gaine de réception de la tige de commande, le carter ayant une extrémité inférieure de carter liée de manière étanche à l'adaptateur, le carter ayant une première lèvre à une extrémité supérieure de carter, la gaine ayant une seconde lèvre à une extrémité inférieure de gaine, la première lèvre et la seconde lèvre étant soudées l'une à l'autre et formant un joint oméga, la méthode de maintenance comprenant les étapes suivantes :
- suppression des première et seconde lèvres;
- réalisation d'au moins une opération de maintenance sur l'ensemble de commande;
- création d'une surface de soudage à l'extrémité supérieure de carter en usinant ladite extrémité supérieure de carter;
- création une liaison soudée étanche entre le carter et ladite gaine ou une gaine de remplacement, par soudage de la surface de soudage et d'une surface de soudage complémentaire ménagée à l'extrémité inférieure de gaine de ladite gaine ou à une extrémité inférieure de gaine de la gaine de remplacement.

Ainsi, l'intervention est réalisée au niveau du joint « Oméga ». En conséquence, le carter reste en place et n'est pas remplacé inutilement. Seuls l'EML et éventuellement la gaine sont remplacés.

Il n'est pas nécessaire de déposer le calorifuge du couvercle. Ceci génère un gain planning et dosimétrique.

Il en découle un gain en planning par rapport à la solution RMCG « Canopy ».

Par ailleurs, du fait de la suppression des première et seconde lèvres, le risque de défaut inhérent à la RMCG « Oméga » décrit plus haut est supprimé.

La liaison soudée étanche entre le carter et ladite gaine est recréée au niveau de la surface de soudage nouvellement usinée sur le carter.

Cette zone n'est pas une zone affectée thermiquement par la création de la liaison soudée d'origine, puisque les première et seconde lèvres ont été éliminées. La demanderesse estime que cette zone n'a pas de raison de présenter le défaut évoqué plus haut.

La méthode de maintenance peut en outre présenter une ou plusieurs des caractéristiques ci-dessous, considérées individuellement ou selon toutes les combinaisons techniquement possibles :
- la surface de soudage complémentaire est venue de matière avec l'extrémité inférieure de gaine, la surface de soudage étant soudée directement à la surface de soudage complémentaire ;
- l'extrémité supérieure de carter est de forme tubulaire autour d'un axe de déplacement de la tige de commande, l'extrémité supérieure de carter présentant une surface supérieure de carter sensiblement annulaire perpendiculaire audit axe de déplacement et tournée à l'opposé de l'adaptateur, l'extrémité supérieure de carter présentant en outre une surface radialement interne de carter et une surface radialement externe de carter, l'extrémité inférieure de gaine présentant une surface supérieure de gaine sensiblement annulaire perpendiculaire audit axe de déplacement et tournée à l'opposé de l'adaptateur, l'extrémité inférieure de gaine présentant en outre une surface radialement externe, la surface de soudage étant créée par usinage au moins de ladite surface supérieure de carter, et éventuellement en plus par usinage de la surface radialement interne de carter et/ou de la surface radialement externe de carter ;
- la méthode comprend une étape de création de la surface de soudage complémentaire à l'extrémité inférieure de gaine en usinant au moins la surface supérieure de gaine, et éventuellement en plus la surface radialement externe de gaine ;
- la surface de soudage et la surface de soudage complémentaire forment une gorge en V , creusée dans la surface supérieure de gaine et dans la surface supérieure de carter ;
- la surface de soudage est une zone annulaire de la surface supérieure de carter et la surface de soudage complémentaire est une zone de la surface radialement externe de gaine, un soudage d'angle étant effectué à l'étape de création de la liaison soudée étanche ;
- la surface de soudage est ménagée sur une troisième lèvre usinée dans l'extrémité supérieure de carter , et la surface de soudage complémentaire est ménagée sur une quatrième lèvre portée par l'extrémité supérieure de gaine, la troisième lèvre la quatrième lèvre définissant ensemble un joint en oméga ;
- une demi-cavité de carter est creusée dans une surface du carter, une demi-cavité de gaine étant creusée dans une surface de la gaine , la demi-cavité de carter et la demi-cavité de gaine définissant ensemble une cavité agencée le long de la liaison soudée, la surface de soudage et la surface de soudage complémentaire formant une rainure débouchant dans la cavité ;
- la cavité est agencée axialement ou radialement sous la liaison soudée ;
- une gorge de décharge des contraintes de carter est ménagée dans la surface supérieure de carter, et/ou une gorge de décharge des contraintes de gaine est ménagée dans la surface supérieure de gaine.

D'autres caractéristiques et avantages de l'invention ressortiront de la description détaillée qui en est donnée ci-dessous, à titre indicatif et nullement limitatif, en référence aux figures annexées, parmi lesquelles :
la figure 1 est une représentation schématique simplifiée d'un réacteur nucléaire ;
la figure 2 est une vue en coupe d'un mécanisme de commande de grappe du réacteur nucléaire de la figure 1 ;
la figure 3 est une vue agrandie du joint « Canopy » de la liaison soudée entre le carter et l'adaptateur sur lequel est monté le mécanisme de commande de grappe de la figure 2 ;
la figure 4 est une vue agrandie du joint « Oméga » de la liaison soudée entre le carter et la gaine du mécanisme de commande de grappe de la figure 2, avant mise en oeuvre de la méthode de maintenance de l'invention ; et
les figures 5 à 13 sont des vues similaires à celle de la figure 4, après mise en oeuvre de différentes variantes de la méthode de l'invention.

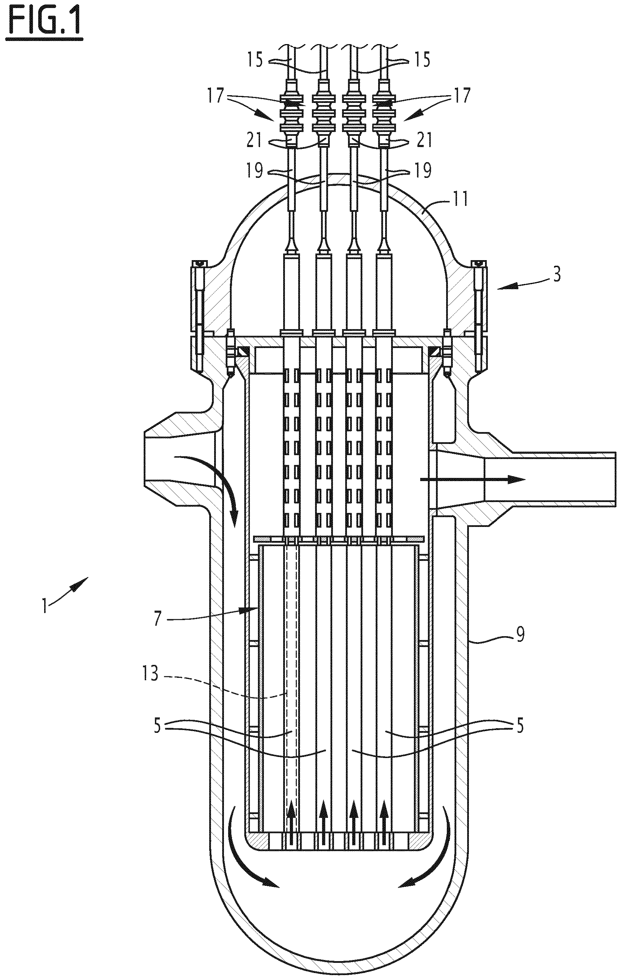

Le réacteur nucléaire 1 représenté sur la figure 1 comporte une cuve sous pression 3, dans laquelle sont disposés des assemblages de combustible nucléaire 5 constituant le coeur 7 du réacteur nucléaire.

La cuve sous pression 3 comporte une partie inférieure 9 et un couvercle 11 fixée de manière amovible à la partie inférieure 9.

Le réacteur nucléaire 1 comporte encore des grappes de contrôle 13 susceptible d'être insérées ou extraites du coeur 7 en vue de contrôler la réactivité du coeur.

Chaque grappe 13 comprend plusieurs crayons en un matériau absorbant les neutrons.

Chaque grappe de contrôle 13 est fixée au bout d'une tige de commande 15, elle-même déplacée par un Mécanisme de Commande de Grappe (MCG).

Les Mécanismes de Commande de Grappes (MCG) assurent chacun l'extraction, le maintien ou l'insertion d'une grappe de contrôle dans le coeur du réacteur. Ils doivent également autoriser la chute libre des tiges de commande de grappe à l'ouverture des disjoncteurs d'arrêt automatique du réacteur.

Le réacteur nucléaire 1 comprend ainsi une pluralité d'ensembles de commande 17, chacun dédié à une grappe de contrôle 13.

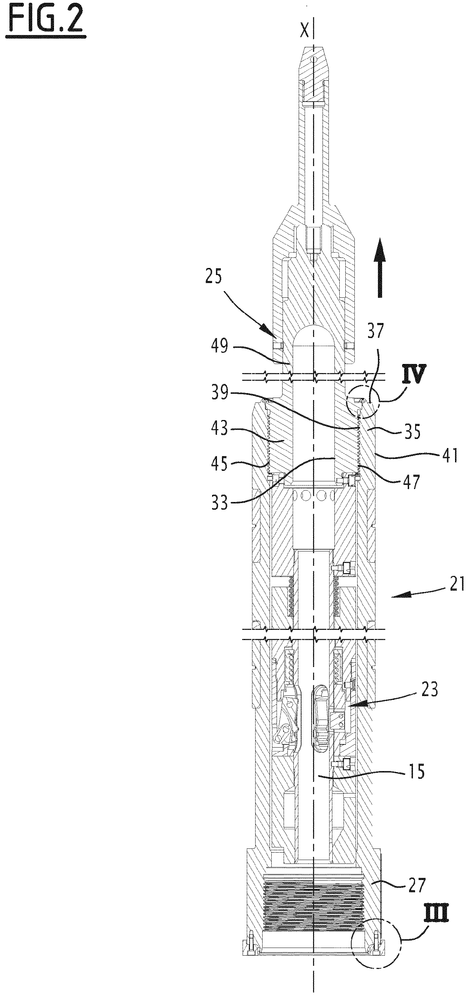

Chaque ensemble de commande 17 comprend un adaptateur 19 solidaire du couvercle 11 de la cuve sous pression, un carter 21 de réception d'un mécanisme 23 de levée de la tige de commande 15 de la grappe de contrôle 13 et une gaine 25 de réception de la tige de commande 15 (figures 1 et 2). Sur la figure 1, les gaines ne sont pas représentées pour laisser apparaître les extrémités supérieures des tiges de commandes 15.

L'adaptateur 19 est engagé dans un orifice traversant du couvercle de cuve 11 et est rigidement fixé à celui-ci. Il traverse le couvercle de cuve 11 et délimite un passage à travers lequel se déplace la tige de commande 15.

Le mécanisme de levée 23 est généralement appelé ensemble mécanisme de levée (EML). Ce mécanisme est un actionneur ayant pour fonction le contrôle, l'insertion ou l'extraction de la tige de commande 15.

Le carter 21 et la gaine 25 forment ensemble une enceinte sous pression, en communication fluidique avec l'intérieur de la cuve sous pression à travers l'adaptateur 19.

Le mécanisme de levée 23, le carter 21 et la gaine 25 forment le sous-ensemble désigné généralement par le terme Mécanisme de Commande de Grappe (MCG).

Le carter 21 est une pièce tubulaire, ayant un axe central correspondant sensiblement à l'axe de déplacement X de la tige de commande 15. Il délimite intérieurement un volume interne dans lequel est engagé la tige de commande 15. Le mécanisme de levée 23 est logé entre la tige et la paroi du carter.

Dans la présente description, les termes inférieur et supérieur, le bas et le haut, sont entendus selon l'axe de déplacement X de la tige de commande 15.

Celle-ci est normalement verticale.

Le carter 21 a une extrémité inférieure de carter 27 liée de manière étanche à l'adaptateur 19.

Plus précisément, l'extrémité inférieure de carter 27 est typiquement vissée sur une extrémité supérieure 29 de l'adaptateur 19.

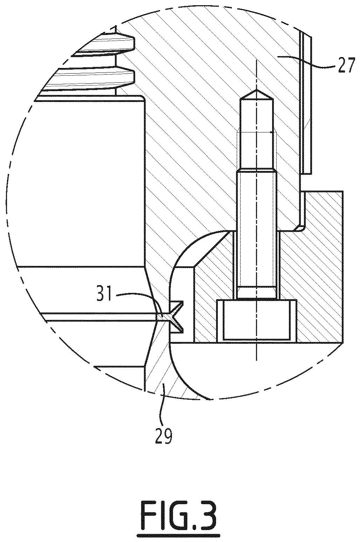

L'étanchéité entre l'extrémité inférieure de carter 27 et l'extrémité supérieure 29 de l'adaptateur est réalisée par un joint soudé 31, appelé fréquemment joint « Canopy » (figure 3).

La gaine 25 constitue la partie supérieure de l'enceinte sous pression.

Elle délimite un volume interne 33 dans lequel la tige de commande 15 vient se loger en position haute de la grappe de contrôle 13. Ce volume interne 33 est fermé vers le haut et communique avec le volume interne du carter 21 vers le bas.

Le carter 21 présente une extrémité supérieure de carter 35 de forme tubulaire autour de l'axe de déplacement X.

La forme de l'extrémité supérieure de carter 35 et la forme de l'extrémité inférieure de gaine 43 avant application de la méthode de l'invention vont maintenant être décrites.

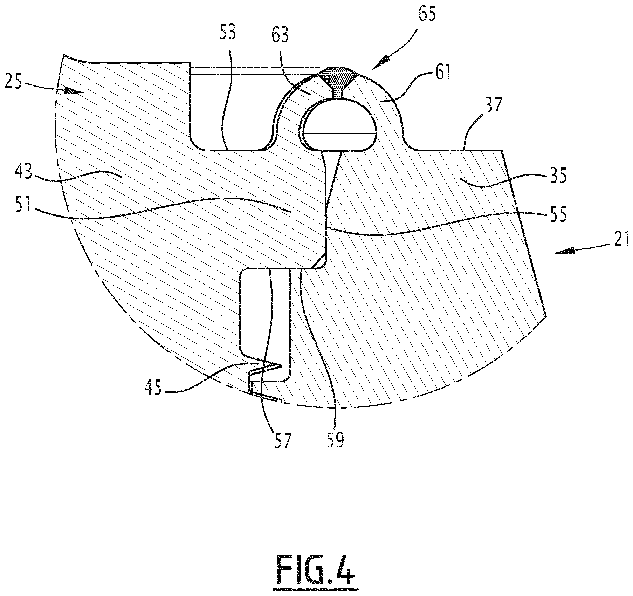

Comme visible sur les figures 2 et 4, l'extrémité supérieure de carter 35 présente une surface supérieure de carter 37 sensiblement annulaire perpendiculaire audit axe de déplacement X et tournée à l'opposé de l'adaptateur 19.

L'extrémité supérieure de carter 35 présente en outre une surface radialement interne de carter 39 et une surface radialement externe de carter 41 ;

La gaine 25 présente une extrémité inférieure de gaine 43 engagée dans l'extrémité supérieure de carter 35 et fixée à celle-ci.

L'extrémité inférieure de gaine 43 présente à cet effet un filetage externe 45, coopérant avec un taraudage 47 porté par la surface radialement interne de carter 39.

La gaine 25 présente également une partie principale 49 située hors du carter 21.

Une nervure annulaire 51 est ménagée sur l'extrémité inférieure de gaine 43, à la jonction avec la partie principale 49. Elle est située au-dessus du filetage externe 45.

L'extrémité inférieure de gaine 43 présente une surface supérieure de gaine 53, sensiblement annulaire, perpendiculaire à l'axe de déplacement X, et tournée à l'opposé de l'adaptateur 19.

Cette surface supérieure de gaine 53 est définie par la nervure annulaire 51.

La surface supérieure de gaine 53 s'étend sensiblement dans le même plan que la surface supérieure de carter 37.

L'extrémité inférieure de gaine 43 présente en outre une surface radialement externe 55.

Cette surface radialement externe 55 est définie par la nervure annulaire 51.

Elle est en appui contre la surface radialement interne de carter 39.

La nervure annulaire 51 définit en outre une surface inférieure de gaine 57, sensiblement annulaire et perpendiculaire à l'axe de déplacement X. La surface inférieure de gaine 57 est en appui sur un épaulement 59 formé dans la surface radialement interne 47 de l'extrémité supérieure de carter 35.

Comme illustré sur la figure 4, avant mise en oeuvre de la méthode de l'invention, le carter 21 comporte une première lèvre 61 à l'extrémité supérieure de carter 35.

La gaine 25 comporte une seconde lèvre 63 à l'extrémité inférieure de gaine 43.

La première lèvre 61 et la seconde lèvre 63 sont soudées l'une à l'autre de manière étanche et forment ensemble un joint oméga 65.

La surface supérieure de carter 37 porte la première lèvre 61.

La surface supérieure de gaine 53 porte la seconde lèvre 63.

Les première et seconde lèvres 61, 63 s'étendent chacune tout autour de l'axe X et sont à contours fermés. Elles sont courbées l'une vers l'autre, et présentent chacune une section en forme de quart de cercle. Ensemble, elles constituent un demi tore, coaxial à l'axe X.

Les première et seconde lèvres 61, 63 délimitent avec la surface supérieure de carter 37 et avec la surface supérieure de gaine 53 une cavité s'étendant tout autour de l'axe X.

Ce joint 65 est dit en oméga du fait de sa forme.

La méthode de maintenance vise à intervenir sur l'ensemble de commande 17 pour effectuer une opération de maintenance de celui-ci.

La méthode de maintenance comprenant les étapes suivantes :
- suppression des première et seconde lèvres 61, 63 ;
- réalisation d'au moins une opération de maintenance sur l'ensemble de commande 17 ;
- création d'une surface de soudage 67 à l'extrémité supérieure de carter 35 en usinant ladite extrémité supérieure de carter 35 ;
- création d'une liaison soudée étanche 69 entre le carter 21 et la gaine 25 ou une gaine de remplacement 71, par soudage de la surface de soudage 67 et d'une surface de soudage complémentaire 73 ménagée à l'extrémité inférieure de gaine 43 de la gaine 25 ou à une extrémité inférieure de gaine de la gaine de remplacement 71.

A l'étape de suppression, les première et seconde lèvres 61, 63 sont entièrement éliminées. Cette opération est effectuée sur site, après démontage du couvercle de cuve 11 et entreposage de celui-ci sur son stand.

La suppression est effectuée typiquement en téléopération, par tous moyens adaptés (meule, scie, machine d'usinage...)

L'au moins une opération de maintenance comprend typiquement une ou plusieurs des opérations ci-dessous :
- remplacement de la gaine 25,
- remplacement ou réparation de l'EML 23,
- usinage de l'extrémité supérieure du carter 35 et contrôles associés...

La surface de soudage 67 est créée par usinage, c'est-à-dire par enlèvement de matière dans l'extrémité supérieure de carter 35, conduisant à une modification permanente de la forme de l'extrémité supérieure de carter 35.

La surface de soudage 67 est créée par usinage au moins de la surface supérieure de carter 37, et éventuellement en plus par usinage de la surface radialement interne de carter 39 et/ou de la surface radialement externe de carter 41.

Après usinage, l'extrémité supérieure de carter 35 présente encore une surface supérieure de carter, une surface radialement interne de carter et une surface radialement externe de carter, mais une ou plusieurs de ces surfaces ont des formes différentes de leurs formes d'origine. Ces surfaces, après usinage, sont toujours désignées par les références 37, 39 et 41 dans la description qui va suivre.

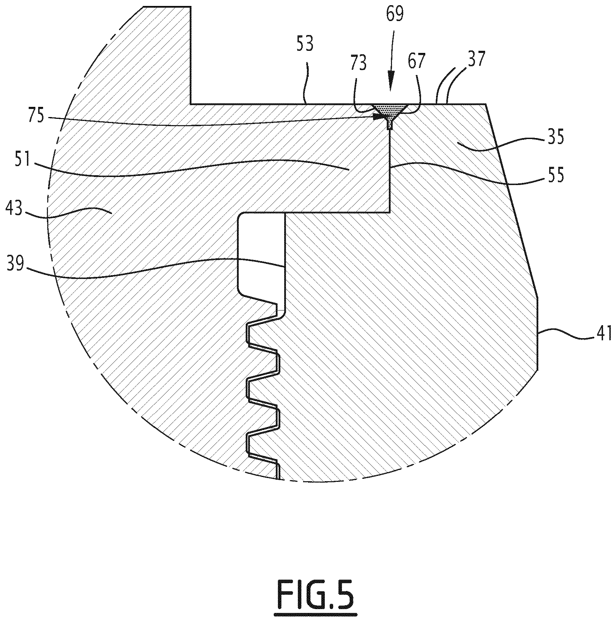

Selon un premier mode de réalisation, la méthode comprend une étape de création de la surface de soudage complémentaire 73 à l'extrémité inférieure de gaine 43 en usinant l'extrémité inférieure de la gaine 25 d'origine (voir figures 5, 8 et 9).

Dans ce cas, la surface de soudage complémentaire 73 est créée par usinage au moins la surface supérieure de gaine 53, et éventuellement en plus par usinage de la surface radialement externe de gaine 55.

Après usinage, l'extrémité inférieure de gaine 43 présente encore une surface supérieure de gaine et une surface radialement externe de gaine, mais une ou plusieurs de ces surfaces ont des formes différentes de leurs formes d'origine. Ces surfaces sont toujours désignées par les références 53 et 55 dans la description qui va suivre.

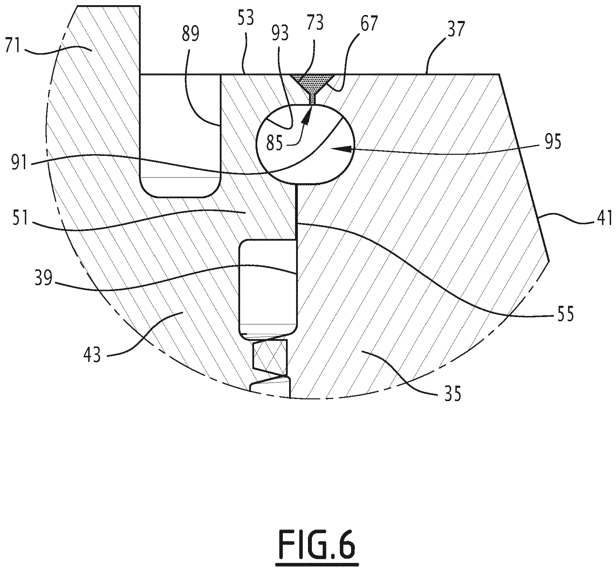

Selon un second mode de réalisation, la gaine 25 d'origine est remplacée par la gaine de remplacement 71 (voir figures 6, 7, et 10 à 13).

La méthode comprend alors une étape de fabrication de la gaine de remplacement 71 et une étape de montage de la gaine de remplacement 71 sur le carter 21.

La gaine de remplacement 71 est fabriquée dans une usine distante, la surface de soudage complémentaire 73 étant formée lors de la fabrication de la gaine de remplacement.

La gaine de remplacement 71 présente la même forme que la gaine 25 d'origine, à l'exception de la nervure annulaire 51.

En d'autres termes, la gaine de remplacement 71 comporte une nervure annulaire 51 de forme différente de celle de la nervure annulaire 51 de la gaine d'origine 25. Ses autres éléments sont tous identiques à ceux de la gaine 25 d'origine.

Selon une première variante de réalisation, la liaison soudée étanche 69 est réalisée par un soudage d'angle de la surface de soudage 67 et de la surface de soudage complémentaire 73 (figures 5, 8 et 9).

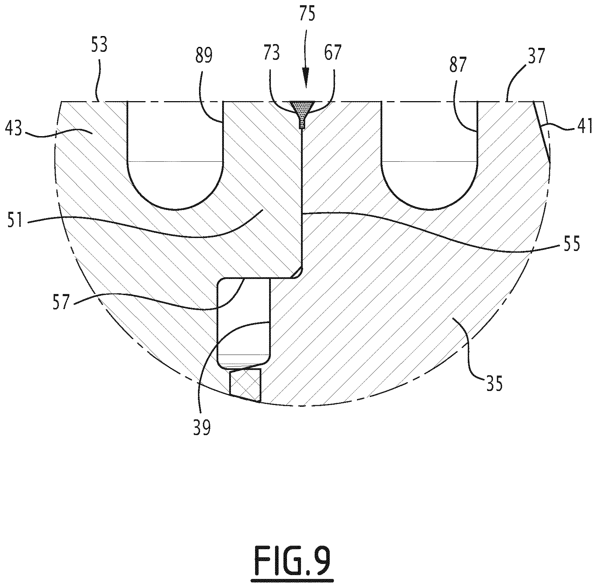

Selon une première sous-variante, la surface de soudage 67 et la surface de soudage complémentaire 73 forment une gorge en V 75 (figures 5 et 9).

La gorge en V 75 présente une section allant en se rétrécissant axialement (figures 5 et 9), ou radialement.

Dans un premier cas (figures 5 et 9), la gorge en V 75 est creusée dans la surface supérieure de gaine 53 et dans la surface supérieure de carter 37.

Notamment, la surface de soudage 67 est créée en usinant l'arête raccordant la surface radialement interne de carter 39 et la surface supérieure de carter 37.

La surface de soudage complémentaire 73 est créée par exemple en usinant l'arête raccordant la surface radialement externe de gaine 55 et la surface supérieure de gaine 53.

Dans un second cas (non représenté), la gorge en V 75 est creusée dans la surface radialement externe de gaine 55 et dans la surface radialement externe de carter 41.

La liaison soudée étanche 69 est réalisée en remplissant la gorge en V 75 avec un métal d'apport.

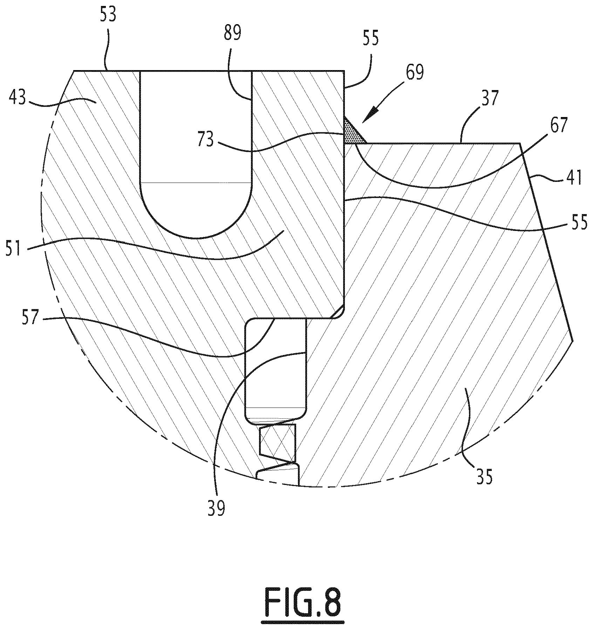

Selon une seconde sous-variante, la surface de soudage 67 est une zone annulaire de la surface supérieure de carter 37 et la surface de soudage complémentaire 73 est une zone de la surface radialement externe de gaine 55 (figure 8).

La surface de soudage 67 s'étend contre et le long de la surface complémentaire de soudage 73.

Par exemple, la surface de soudage 67 est créée en usinant l'extrémité supérieure de carter 35 de manière à la raccourcir axialement. En d'autres termes, le tronçon d'extrémité est entièrement supprimé, de manière à ramener la surface supérieure de carter 37 sous la surface supérieure de gaine 53 et à former une marche entre les surfaces 37 et 53.

La liaison soudée étanche 69 est réalisée en remplissant l'angle entre la surface de soudage 67 et la surface complémentaire de soudage 73 avec un métal d'apport.

La première variante de réalisation, selon ses différentes sous-variantes, est applicable dans le cadre du premier mode de réalisation ou du second mode de réalisation.

Selon une seconde variante de réalisation, la liaison soudée étanche 69 est réalisée par un soudage bout à bout de la surface de soudage 67 et de la surface de soudage complémentaire 73 (figures 6, 7, 10, 11, 12 et 13).

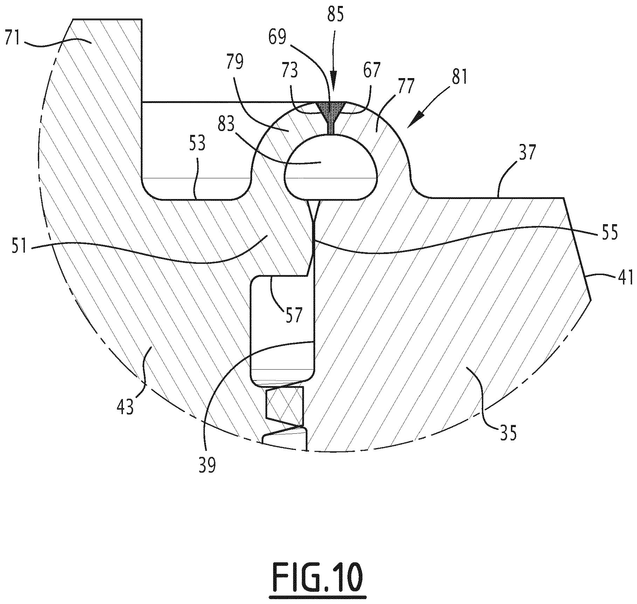

Selon une première sous-variante (figures 10, 11, 13), la surface de soudage 67 est ménagée sur une troisième lèvre 77 usinée dans l'extrémité supérieure de carter 35.

La surface de soudage complémentaire 73 est ménagée sur une quatrième lèvre 79 portée par l'extrémité supérieure de gaine 43.

La troisième lèvre 77 et la quatrième lèvre 79 définissant ensemble un joint en oméga 81.

La troisième lèvre 77 est portée par la surface supérieure de carter 37.

La quatrième lèvre 79 est portée par la surface supérieure de gaine 53.

Selon un première possibilité , les troisième et quatrième lèvres 77, 79 ont la même forme que respectivement les première et seconde lèvres 61, 63, et le joint en oméga 81 a la même forme que le joint en oméga 65 (figure 10).

En d'autres termes, les troisième et quatrième lèvres 77, 79 s'étendent chacune tout autour de l'axe de déplacement X et sont à contours fermés. Elles sont courbées l'une vers l'autre, et présentent chacune une section en forme de quart de cercle. Ensemble, elles constituent un demi tore, coaxial à l'axe de déplacement X.

Les troisième et quatrième lèvres 77, 79 délimitent avec la surface supérieure de carter 37 et avec la surface supérieure de gaine 53 une cavité 83 s'étendant tout autour de l'axe de déplacement X.

La surface de soudage 67 est formée sur l'extrémité de la troisième lèvre 77. La surface de soudage complémentaire 73 est formée sur l'extrémité de la quatrième lèvre 79.

La surface de soudage 67 et la surface de soudage complémentaire 73 sont inclinées l'une par rapport à l'autre et délimitent entre elles une rainure 85.

La largeur de la rainure 85, prise dans un plan radial contenant l'axe de déplacement X, va en décroissant depuis l'extérieur du joint en oméga 81 vers l'intérieur, c'est-à-dire vers la cavité 83.

La rainure 85 est située au sommet du joint en oméga 81.

La rainure 85, avant remplissage, est débouchante selon l'axe X, des deux côtés opposés. Elle est débouchante vers le bas dans la cavité 83. Elle est débouchante vers le haut à l'opposé de la cavité 83.

La liaison soudée étanche 69 est réalisée par un soudage bout à bout des troisième et quatrième lèvres 77, 79, en remplissant la rainure 85 avec un métal d'apport.

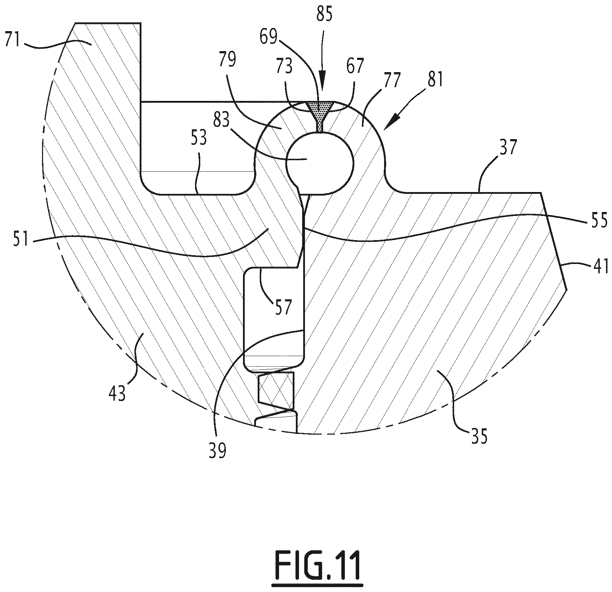

Selon une seconde possibilité (figure 11), la surface supérieure de carter 37 et/ou la surface supérieure de gaine 53 sont légèrement creusées, de telle sorte que la cavité 83 est de section circulaire dans un plan radial contenant l'axe X.

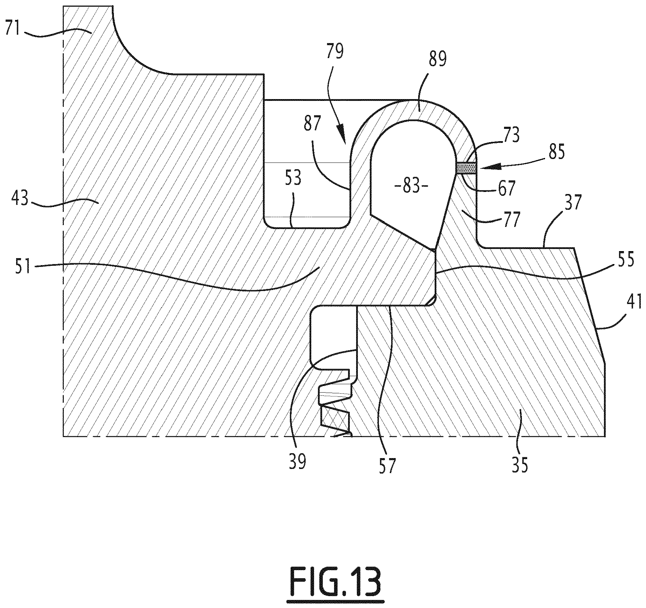

Selon une troisième possibilité (figure 13), la rainure 85 est située sur le côté radialement extérieur du joint en oméga 81.

La rainure 85, avant remplissage, est débouchante selon une direction radiale perpendiculaire à l'axe de déplacement X, des deux côtés opposés. Elle est débouchante radialement vers l'intérieur dans la cavité 83. Elle est débouchante radialement vers l'extérieur à l'opposé de la cavité 83.

La troisième lèvre 77, considérée en section dans un plan radial contenant l'axe de déplacement X, s'étend de manière sensiblement rectiligne à partir de la surface supérieure de carter 37, parallèlement à l'axe de déplacement X. La quatrième lèvre 79, considérée en section dans un plan radial contenant l'axe de déplacement X, comprend une partie rectiligne 87 s'étendant de manière sensiblement rectiligne à partir de la surface supérieure de carter 37, parallèlement à l'axe de déplacement X, et une partie arquée 89 prolongeant la partie rectiligne 87.

La partie arquée 89 dans l'exemple représenté est un demi-cercle, mais pourrait couvrir moins de 180° ou plus de 180°, en fonction de la hauteur de la troisième lèvre 77.

La largeur de la rainure 85, prise dans un plan radial contenant l'axe de déplacement X, va en décroissant depuis l'extérieur du joint en oméga 81 vers l'intérieur, c'est-à-dire vers la cavité 83.

Selon seconde sous-variante (figures 6, 7 et 12), une demi-cavité de carter 91 est creusée à la surface du carter 21, une demi-cavité de gaine 93 étant creusée à la surface de la gaine 25, la demi-cavité de carter 91 et la demi-cavité de gaine 93 définissant ensemble une cavité 95 agencée le long de la liaison soudée 69.

Ceci permet de réaliser un soudage bout à bout des de la surface de soudage 67 et de la surface de soudage complémentaire 73.

Comme dans la première sous-variante, la surface de soudage 67 et la surface de soudage complémentaire 73 sont inclinées l'une par rapport à l'autre et délimitent entre elles une rainure 85.

La largeur de la rainure 85, prise dans un plan radial contenant l'axe de déplacement X, va en décroissant depuis l'extérieur de la liaison soudée 69 vers l'intérieur, c'est-à-dire vers la cavité 95.

La rainure 85 débouche dans la cavité 95 par son extrémité la plus étroite, avant remplissage.

En effet, quand le fond de la rainure 85 n'est pas débouchant, ce fond constitue une zone où le risque de fissuration est particulièrement élevé. Rendre le fond de la rainure 85 débouchant dans la cavité permet de réduire considérablement ce risque.

La cavité 95 est avantageusement rempli par un gaz inerte au moment du soudage des surfaces 67 et 73 l'une avec l'autre.

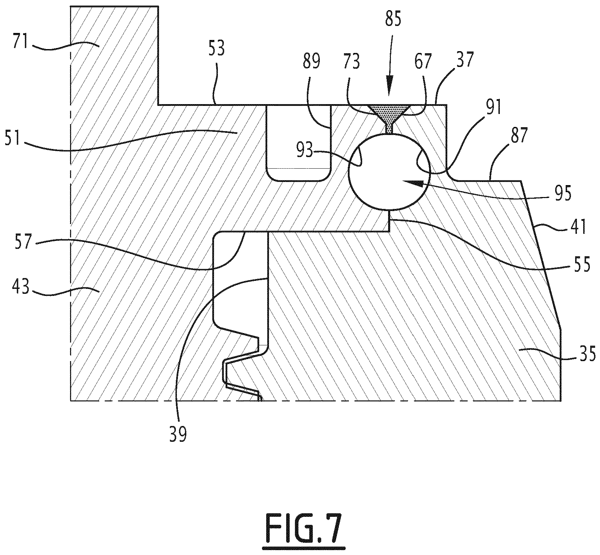

Selon une première possibilité de réalisation (figures 6 et 7), la demi-cavité de carter 91 est creusée dans la surface radialement interne de carter 39, la demi-cavité de gaine 93 étant creusée dans la surface radialement externe de gaine 55, la cavité 95 étant agencée axialement sous la liaison soudée 69.

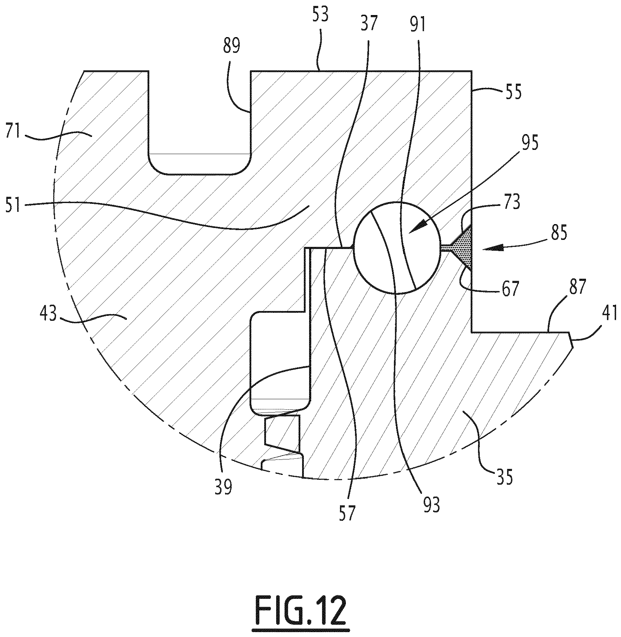

Selon une seconde possibilité de réalisation (figure 12), la demi-cavité de carter 91 est creusée dans la surface supérieure de carter 37, la demi-cavité de gaine 93 étant creusé dans la surface inférieure de gaine 57, la cavité 95 étant agencée radialement sous la liaison soudée 69.

Dans tous les cas, la méthode comprend une étape d'usinage de la demi-cavité de carter 91 dans l'extrémité supérieure de carter 35.

Selon le premier mode de réalisation, la méthode comprend une étape d'usinage de la demi-cavité de gaine 93 dans l'extrémité inférieure de gaine 43.

Selon le second mode de réalisation, la demi-cavité de gaine 93 est ménagée lors de la fabrication de la gaine de remplacement 71.

La seconde variante de réalisation, selon ses différentes sous-variantes, est particulièrement adaptée au second mode de réalisation. Elle est aussi utilisable avec le premier mode de réalisation, en fonction de la forme initiale de la gaine.

Selon un aspect avantageux applicable aux différentes variantes et sous-variantes, une gorge de décharge des contraintes de carter 87 est ménagée dans la surface supérieure de carter 37 (figure 9), et/ou une gorge de décharge des contraintes de gaine 89 est ménagée dans la surface supérieure de gaine (figures 6 à 9 et 12).

Ces gorges 87, 89 sont prévues respectivement pour réduire les contraintes générées dans le métal constituant l'extrémité supérieure de carter 35 et/ou l'extrémité inférieure de gaine 43 au moment du soudage.

Quand la gorge 87 est présente, elle s'étend tout autour de l'axe X.

La méthode comprend alors une étape d'usinage de la gorge de décharge de contraintes 87 dans la surface supérieure de carter 37.

Quand la gorge 89 est présente, elle s'étend tout autour de l'axe X.

Selon une variante applicable au premier mode de réalisation, la méthode comprend alors une étape d'usinage de la gorge de décharge de contraintes 89 dans la surface supérieure de gaine 53.

Selon une autre variante applicable au second mode de réalisation, la gorge 89 est ménagée lors de la fabrication de la gaine de remplacement 71.

La présence d'au moins une gorge de décharge de contraintes est particulièrement adaptée dans le cadre de la première variante (soudure d'angle).

Plusieurs exemples de réalisation de l'invention vont maintenant être décrits brièvement, en référence aux figures 5 à 13. Les éléments identiques ou assurant les mêmes fonctions seront désignés par les mêmes références dans tous les exemples de réalisation.

Selon l'exemple de réalisation de la figure 5, la surface de soudage 67 et la surface de soudage complémentaire 73 forment une gorge en V 75, creusée dans la surface supérieure de gaine 37 et dans la surface supérieure de carter 53 (première variante, première sous-variante).

La gorge en V 75 court au niveau de la surface de contact entre la surface radialement interne de carter 39 et la surface radialement externe de gaine 55.

La gorge en V 75 présente une section allant en se rétrécissant axialement.

Le fond de la gorge 75 est fermé.

Aucune gorge de décharge de contrainte n'est ménagée, ni sur la surface supérieure de gaine ni sur la surface supérieure de carter.

Le carter 21 ne comporte pas de demi-cavité de carter 91 et la gaine 25 ne comporte pas de demi-cavité de gaine 93.

La surface de soudage 67 est créée, à l'étape de création, en usinant l'arête raccordant la surface radialement interne de carter 39 et la surface supérieure de carter 37.

La méthode comporte une étape de création de la surface de soudage complémentaire 73, par usinage de l'arête raccordant la surface radialement externe de gaine 55 et la surface supérieure de gaine 53 de la gaine 25 d'origine.

En variante, la gaine 25 d'origine est remplacée par une gaine de remplacement 71, la surface de soudage complémentaire 73 étant formée lors de la fabrication de la gaine de remplacement.

Dans l'exemple de réalisation de la figure 6, la surface de soudage 67 et la surface de soudage complémentaire 73 forment une rainure 85, creusée dans la surface supérieure de gaine 37 et dans la surface supérieure de carter 53 (seconde variante, seconde sous-variante).

La rainure 85 court au niveau de la surface de contact entre la surface radialement interne de carter 39 et la surface radialement externe de gaine 55.

La rainure 85 présente une section allant en se rétrécissant axialement.

Le carter 21 comporte une demi-cavité de carter 91 creusée dans la surface radialement interne de carter 39. La gaine 25 comporte une demi-cavité de gaine 93 creusée dans la surface radialement externe de gaine 55. La cavité 95 s'étend axialement sous la rainure 85.

Le fond de la rainure 85 débouche dans la cavité 95.

La cavité 95, dans un plan radial contenant l'axe X, est de section ovale.

Une gorge de décharge de contrainte 89 est ménagée sur la surface supérieure de gaine 53. En revanche, la surface supérieure de carter ne comporte pas de gorge de décharge de contrainte.

La surface de soudage 67 est créée, à l'étape de création, en usinant l'arête raccordant la surface radialement interne de carter 39 et la surface supérieure de carter 37.

La méthode comprend une étape d'usinage de la demi-cavité de carter 91 dans l'extrémité supérieure de carter 35.

La gaine 25 d'origine est remplacée par une gaine de remplacement 71, la surface de soudage complémentaire 73 et la demi-cavité de gaine 93 étant formées lors de la fabrication de la gaine de remplacement.

L'exemple de réalisation de la figure 7 est proche de celui de la figure 6. Seuls les points par lesquels cet exemple diffère de celui de la figure 6 seront détaillés ci-dessous.

Dans l'exemple de la figure 7, la cavité 95 est de section circulaire dans un plan radial contenant l'axe X.

La surface supérieure de carter 37 comporte une gorge de décharge de contrainte de carter 87. Cette gorge est creusée dans le bord externe de la surface supérieure de carter 37. Elle est fermée d'un côté radialement interne et ouverte d'un côté radialement externe.

La méthode comprend donc une étape de création de la gorge de décharge de contrainte de carter 87, par usinage de la surface supérieure de carter 37.

Selon l'exemple de la figure 8, la surface de soudage 67 est une zone annulaire de la surface supérieure de carter 37 et la surface de soudage complémentaire 73 est une zone de la surface radialement externe de gaine 55 (première variante de réalisation, seconde sous-variante).

La surface de soudage 67 s'étend contre la surface complémentaire de soudage 73 et le long de cette surface.

A l'étape de création, la surface de soudage 67 est créée en usinant l'extrémité supérieure de carter 35 de manière à la raccourcir axialement. En d'autres termes, le tronçon d'extrémité est entièrement supprimé, de manière à ramener la surface supérieure de carter 37 sous la surface supérieure de gaine 53 et à former une marche entre les surfaces 37 et 53.

La gaine 25 d'origine est conservée. La surface radialement externe de gaine 55 n'est pas modifiée.

A l'étape de création de la liaison soudée étanche 69, le métal d'apport est déposé à l'angle entre la surface de soudage 67 et la surface de soudage complémentaire 73.

Une gorge de décharge de contrainte 89 est ménagée sur la surface supérieure de gaine 53. En revanche, la surface supérieure de carter ne comporte pas de gorge de décharge de contrainte.

La méthode comporte alors une étape d'usinage de la gorge de décharge de contrainte 89 dans la surface supérieure de gaine 53.

En variante, la gaine 25 d'origine est remplacée par une gaine de remplacement 71, fabriquée avec la gorge de décharge de contrainte 89.

L'exemple de réalisation de la figure 9 est proche de celui de la figure 5. Seuls les points par lesquels cet exemple diffère de celui de la figure 5 seront détaillés ci-dessous.

Une gorge de décharge de contrainte 89 est ménagée sur la surface supérieure de gaine 53.

La surface supérieure de carter 37 comporte une gorge de décharge de contrainte de carter 87.

Cette gorge est creusée sensiblement au centre de la surface supérieure de carter 37.

Elle est fermée d'un côté radialement interne et d'un côté radialement externe.

La méthode comprend donc une étape de création d'une gorge de décharge de contrainte de carter 87, par usinage de la surface supérieure de carter 37.

Selon l'exemple de la figure 10, la surface de soudage 67 est ménagée sur une troisième lèvre 77 usinée dans l'extrémité supérieure de carter 35, et la surface de soudage complémentaire 73 est ménagée sur une quatrième lèvre 79 portée par l'extrémité supérieure de gaine 43 (seconde variante de réalisation, première sous-variante).

La troisième lèvre 77 et la quatrième lèvre 79 définissent ensemble un joint en oméga 81.

La troisième lèvre 77 est portée par la surface supérieure de carter 37.

La quatrième lèvre 79 est portée par la surface supérieure de gaine 53.

Cet exemple correspond à la première possibilité décrite plus haut.

Aucune gorge de décharge de contrainte n'est ménagée, ni sur la surface supérieure de gaine ni sur la surface supérieure de carter.

Le carter 21 ne comporte pas de demi-cavité de carter 91 et la gaine 25 ne comporte pas de demi-cavité de gaine 93.

A l'étape de création, l'extrémité supérieure de carter 35 est usinée pour former la troisième lèvre 77.

La gaine 25 d'origine est remplacée par une gaine de remplacement 71, fabriquée avec la quatrième lèvre 79.

L'exemple de réalisation de la figure 11 est proche de celui de la figure 10. Seuls les points par lesquels cet exemple diffère de celui de la figure 10 seront détaillés ci-dessous.

Comme indiqué plus haut, la surface supérieure de carter 37 et la surface supérieure de gaine 53 sont légèrement creusées, de telle sorte que la cavité 83 est de section circulaire dans un plan radial contenant l'axe de déplacement X.

Cet exemple correspond également à la première possibilité décrite plus haut.

Selon l'exemple de réalisation de la figure 12, la surface de soudage 67 et la surface de soudage complémentaire 73 forment une rainure 85.

La rainure 85 est creusée dans la surface radialement externe de gaine 55 et dans la surface radialement externe de carter 41.

La rainure 85 court au niveau du plan de contact entre la surface supérieure de carter 37 et la surface inférieure de gaine 57.

La rainure 85 présente une section allant en se rétrécissant radialement.

Une demi-cavité de carter 91 est creusée dans la surface supérieure de carter 37, une demi-cavité de gaine 93 étant creusé dans la surface inférieure de gaine 57. La cavité 95 est agencée radialement sous la liaison soudée 69, c'est-à-dire radialement immédiatement à l'intérieur de la liaison soudée 69 (seconde variante, seconde sous-variante, seconde possibilité).

La rainure 85 débouche par son fond dans la cavité 95.

Une gorge de décharge des contraintes de gaine 89 est ménagée dans la surface supérieure de gaine 53.

Une gorge de décharge de contraintes 87 est ménagée dans l'extrémité supérieure de carter 35. La gorge 87 est ouverte radialement vers l'extérieur, comme dans l'exemple de la figure 7.

La surface de soudage 67 est créée, à l'étape de création, en usinant l'extrémité supérieure de carter 35 de manière à la raccourcir axialement. En d'autres termes, le tronçon d'extrémité est entièrement supprimé.

De plus, la surface radialement externe de carter 41 est usinée de manière à créer la gorge de décharge de contraintes 87.

L'arête raccordant le côté intérieur de la gorge 87 à la surface supérieure de carter 37 est usinée en oblique pour former surface de soudage 67.

La surface supérieure de carter 37 est creusée par usinage pour former la demi-cavité de carter 91.

La gaine 25 d'origine est remplacée par une gaine de remplacement 71, la surface de soudage complémentaire 73 étant formée lors de la fabrication de la gaine de remplacement.

La nervure annulaire 51 de la gaine de remplacement 71 est radialement plus large que celle de la gaine 25 d'origine. Elle définit une surface inférieure de gaine 57 reposant sur la surface supérieure de carter 37 et couvrant entièrement celle-ci.

La surface de soudage complémentaire 73 est une surface oblique raccordant la surface radialement externe de gaine 55 à la surface inférieure de gaine 57.

La gorge de décharge de contraintes 87 et le demi-cavité de gaine 93 sont formées lors de la fabrication de la gaine de remplacement 71.

L'exemple de réalisation de la figure 13 ne diffère de celui de la figure 10 que par les formes de la troisième lèvre 77 et de la quatrième lèvre 79. Ces formes ont été décrites plus haut.

## Revendications

1. Méthode de maintenance d'un réacteur nucléaire (1) , le réacteur nucléaire comprenant au moins un ensemble de commande (17) d'une grappe de contrôle (13), le ou chaque ensemble de commande (17) comprenant un adaptateur (19) solidaire d'un couvercle (11) d'une cuve sous pression (3) du réacteur nucléaire (1), un carter (21) de réception d'un mécanisme (23) de levée d'une tige de commande (15) de la grappe de contrôle (13) et une gaine (25) de réception de la tige de commande (15), le carter (21) ayant une extrémité inférieure de carter (27) liée de manière étanche à l'adaptateur (19), le carter (21) ayant une première lèvre (61) à une extrémité supérieure de carter (35), la gaine (25) ayant une seconde lèvre (63) à une extrémité inférieure de gaine (43), la première lèvre (61) et la seconde lèvre (63) étant soudées l'une à l'autre et formant un joint oméga (65), **caractérisé en ce que** la méthode de maintenance comprend les étapes suivantes :
- suppression des première et seconde lèvres (61, 63) ;
- réalisation d'au moins une opération de maintenance sur l'ensemble de commande (17) ;
- création d'une surface de soudage (67) à l'extrémité supérieure de carter (35) en usinant ladite extrémité supérieure de carter (35) ;
- création d'une liaison soudée (69) étanche entre le carter (21) et ladite gaine (25) ou une gaine de remplacement (71), par soudage de la surface de soudage (67) et d'une surface de soudage complémentaire (73) ménagée à l'extrémité inférieure de gaine (43) de ladite gaine ou à une extrémité inférieure de gaine (43) de la gaine de remplacement (71).

2. Méthode de maintenance selon la revendication 1, dans laquelle la surface de soudage complémentaire (73) est venue de matière avec l'extrémité inférieure de gaine (43), la surface de soudage (67) étant soudée directement à la surface de soudage complémentaire (73).

3. Méthode de maintenance selon l'une quelconque des revendications 1 à 2, dans laquelle l'extrémité supérieure de carter (35) est de forme tubulaire autour d'un axe de déplacement de la tige de commande (X), l'extrémité supérieure de carter (35) présentant une surface supérieure de carter (37) sensiblement annulaire perpendiculaire audit axe de déplacement (X) et tournée à l'opposé de l'adaptateur (11), l'extrémité supérieure de carter (37) présentant en outre une surface radialement interne de carter (39) et une surface radialement externe de carter (41), l'extrémité inférieure de gaine (43) présentant une surface supérieure de gaine (53) sensiblement annulaire perpendiculaire audit axe de déplacement (X) et tournée à l'opposé de l'adaptateur (11), l'extrémité inférieure de gaine (43) présentant en outre une surface radialement externe (55), la surface de soudage (67) étant créée par usinage au moins de ladite surface supérieure de carter (37), et éventuellement en plus par usinage de la surface radialement interne de carter (39) et/ou de la surface radialement externe de carter (41).

4. Méthode de maintenance selon revendication 3, dans laquelle la méthode comprend une étape de création de la surface de soudage complémentaire (73) à l'extrémité inférieure de gaine (43) en usinant au moins la surface supérieure de gaine (53), et éventuellement en plus la surface radialement externe de gaine (55).

5. Méthode de maintenance selon la revendication 3 ou 4, dans laquelle la surface de soudage (67) et la surface de soudage complémentaire (73) forment une gorge en V (75), creusée dans la surface supérieure de gaine (37) et dans la surface supérieure de carter (53).

6. Méthode de maintenance selon la revendication 3 ou 4, dans laquelle la surface de soudage (67) est une zone annulaire de la surface supérieure de carter (37) et la surface de soudage complémentaire (73) est une zone de la surface radialement externe de gaine (55), un soudage d'angle étant effectué à l'étape de création de la liaison soudée étanche (69).

7. Méthode de maintenance selon la revendication 3 ou 4, dans laquelle la surface de soudage (67) est ménagée sur une troisième lèvre (77) usinée dans l'extrémité supérieure de carter (35), et la surface de soudage complémentaire (73) est ménagée sur une quatrième lèvre (79) portée par l'extrémité supérieure de gaine (43), la troisième lèvre (77) et la quatrième lèvre (79) définissant ensemble un joint en oméga (81).

8. Méthode de maintenance selon l'une quelconque des revendications 3 ou 4, dans laquelle une demi-cavité de carter (91) est creusée dans une surface du carter (21), une demi-cavité de gaine (93) étant creusée dans une surface de la gaine (25), la demi-cavité de carter (91) et la demi-cavité de gaine (93) définissant ensemble une cavité (95) agencée le long de la liaison soudée (69), la surface de soudage (67) et la surface de soudage complémentaire (73) formant une rainure (85) débouchant dans la cavité (95).

9. Méthode de maintenance selon la revendication 8, dans laquelle la cavité (95) est agencée axialement ou radialement sous la liaison soudée (69).

10. Méthode de maintenance selon l'une quelconque des revendications 3 à 9, dans laquelle une gorge de décharge des contraintes de carter (87) est ménagée dans la surface supérieure de carter (37), et/ou une gorge de décharge des contraintes de gaine (89) est ménagée dans la surface supérieure de gaine (53).

## Patentansprüche

1. Wartungsverfahren eines Kernreaktors (1), der Kernreaktor umfassend mindestens eine Steuereinheit (17) eines Steuerstabbündels (13), die oder jede Steuereinheit (17) umfassend einen Adapter (19), der fest mit einem Deckel (11) eines Druckbehälters (3) des Kernreaktors (1) verbunden ist, ein Gehäuse (21) zum Aufnehmen eines Mechanismus (23) zum Anheben eines Steuerstabs (15) des Steuerstabbündels (13) und eine Hülle (25) zum Aufnehmen des Steuerstabs (15), wobei das Gehäuse (21) ein unteres Gehäuseende (27) aufweist, das dicht mit dem Adapter (19 ) verbunden ist, wobei das Gehäuse (21) eine erste Lippe (61) an einem oberen Gehäuseende (35) aufweist, die Hülle (25) eine zweite Lippe (63) an einem unteren Hüllenende (43) aufweist, wobei die erste Lippe (61) und die zweite Lippe (63) miteinander verschweißt sind und eine Omega-Verbindung (65) bilden, **dadurch gekennzeichnet, dass** das Wartungsverfahren die folgenden Schritte umfasst:
- entfernen der ersten und der zweiten Lippe (61, 63);
- Durchführen von mindestens einem Wartungsvorgang an der Steuereinheit (17);
- Erzeugen einer Schweißfläche (67) an dem oberen Gehäuseende (35) durch maschinelles Bearbeiten des oberen Gehäuseendes (35);
- Schaffen einer dichten Schweißverbindung (69) zwischen dem Gehäuse (21) und der Hülle (25) oder einer Ersatzhülle (71) durch Schweißen der Schweißfläche (67) und einer komplementären Schweißfläche (73), die an dem unteren Hüllenende (43) oder an einem unteren Hüllenende (43) der Ersatzhülle (71) ausgebildet ist.

2. Wartungsverfahren nach Anspruch 1, wobei die komplementäre Schweißfläche (73) einstückig mit dem unteren Hüllenende (43) ausgebildet ist, wobei die Schweißfläche (67) direkt an die komplementäre Schweißfläche (73) geschweißt ist.

3. Wartungsverfahren nach einem der Ansprüche 1 bis 2, wobei das obere Gehäuseende (35) rohrförmig um eine Bewegungsachse des Steuerstabs (X) ist, das obere Gehäuseende (35) eine im Wesentlichen ringförmige obere Gehäusefläche (37) aufweist, die senkrecht zu der Bewegungsachse (X) ist und von dem Adapter (11) abgewandt ist, das obere Gehäuseende (37) ferner eine radial innere Gehäusefläche (39) und eine radial äußere Gehäusefläche (41) aufweist, das untere Hüllenende (43) eine im Wesentlichen ringförmige obere Hüllenfläche (53) aufweist, die senkrecht zu der Bewegungsachse (X) ist und von dem Adapter (11) abgewandt ist, das untere Hüllenende (43) ferner eine radial äußere Fläche (55) aufweist, die Schweißfläche (67) durch Bearbeiten zumindest der oberen Gehäusefläche (37) und optional zusätzlich durch Bearbeiten der radial inneren Gehäusefläche (39) und/oder der radial äußeren Gehäusefläche (41) geschaffen wird.

4. Wartungsverfahren nach Anspruch 3, wobei das Verfahren einen Schritt des Erzeugens der komplementären Schweißfläche (73) an dem unteren Hüllenende (43) durch Bearbeiten mindestens der oberen Hüllenfläche (53) und möglicherweise zusätzlich der radial äußeren Hüllenfläche (55) umfasst.

5. Wartungsverfahren nach Anspruch 3 oder 4, wobei die Schweißfläche (67) und die komplementäre Schweißfläche (73) eine V-förmige Nut (75) bilden, die in die obere Hüllenfläche (37) und in die obere Gehäusefläche (53) eingegraben ist.

6. Wartungsverfahren nach Anspruch 3 oder 4, wobei die Schweißfläche (67) ein ringförmiger Bereich der oberen Gehäusefläche (37) ist und die komplementäre Schweißfläche (73) ein Bereich der radial äußeren Hüllenfläche (55) ist, wobei eine Winkelschweißung in dem Schritt eines Schaffens der dichten Schweißverbindung (69) durchgeführt wird.

7. Wartungsverfahren nach Anspruch 3 oder 4, wobei die Schweißfläche (67) an einer dritten Lippe (77) ausgebildet ist, die in das obere Gehäuseende (35) eingearbeitet ist, und die komplementäre Schweißfläche (73) an einer vierten Lippe (79) ausgebildet ist, die von dem oberen Hüllenende (43) getragen wird, wobei die dritte Lippe (77) und die vierte Lippe (79) zusammen eine Omega-Verbindung (81) definieren.

8. Wartungsverfahren nach einem der Ansprüche 3 oder 4, wobei eine Gehäusehalbhohlraum (91) in einer Fläche des Gehäuses (21) ausgespart ist, wobei eine Hüllenhalbhohlraum (93) in einer Fläche der Hülle (25) ausgespart ist, der Gehäusehalbhohlraum (91) und der Hüllenhalbhohlraum (93) zusammen einen Hohlraum (95) definieren, der entlang der Schweißverbindung (69) angeordnet ist, wobei die Schweißfläche (67) und die komplementäre Schweißfläche (73) eine Nut (85) bilden, die in den Hohlraum (95) mündet.

9. Wartungsverfahren nach Anspruch 8, wobei der Hohlraum (95) axial oder radial unter der Schweißverbindung (69) angeordnet ist.

10. Wartungsverfahren nach einem der Ansprüche 3 bis 9, wobei in der oberen Gehäusefläche (37) eine Gehäusespannungsentlastungsnut (87) und/oder in der oberen Hüllenfläche (53) eine Hüllenspannungsentlastungsnut (89) ausgebildet ist.

## Claims

1. A maintenance method for a nuclear reactor (1), the nuclear reactor comprising at least one drive assembly (17) of a control rod assembly (13), the or each drive assembly (17) comprising an adapter (19) rigidly attached to a closure head (11) of a pressure vessel (3) of the nuclear reactor (1), a casing (21) for receiving a mechanism (23) for lifting a drive rod (15) of the control rod assembly (13) and a sheath (25) for receiving the drive rod (15), the casing (21) having a lower end of the casing (27) connected in a leak-tight way to the adapter (19), the casing (21) having a first lip (61) at an upper end of the casing (35), the sheath (25) having a second lip (63) at a lower end of the sheath (43), the first lip (61) and the second lip (63) being welded together and forming an omega seal (65),
**characterized in that** the maintenance method comprises the following steps:
- removing the first and second lips (61, 63);
- carrying out at least one maintenance operation on the control assembly (17);
- creating a welding surface (67) at the upper end of the casing (35) by machining said upper end of the casing (35);
- creating a leak-tight welded connection (69) between the casing (21) and said sheath (25) or a replacement sheath (71), by welding the welding surface (67) and a matching welding surface (73) provided at the lower end of the sheath (43) of the sheath or at a lower end of the sheath (43) of the replacement sheath (71).

2. The maintenance method according to claim 1, wherein the matching welding surface (73) is one piece with the lower end of the sheath (43), the welding surface (67) being welded directly to the matching welding surface (73).

3. The maintenance method according to any of claims 1 to 2, wherein the upper end of the casing (35) has a tubular shape about an axis of movement (X) of the drive rod, the upper end of the casing (35) having a substantially annular upper surface of the casing (37) perpendicular to said axis of movement (X) and oriented opposite the adapter (11), the upper end of the casing (37) further having a radially inner casing surface (39) and a radially outer casing surface (41), the lower end of the casing (43) having a substantially annular upper surface of the casing (53) perpendicular to said axis of movement (X) and oriented opposite the adapter (11), the lower end of the sheath (43) further having a radially outer surface (55), the welding surface (67) being produced by machining at least said upper surface of the casing (37), and, if appropriate, additionally by machining the radially inner surface of the casing (39) and/or the radially outer surface of the casing (41).

4. The maintenance method according to claim 3, wherein the method comprises a step of creating the matching welding surface (73) at the lower end of the sheath (43) by machining at least the upper surface of the sheath (53), and, if appropriate, additionally the radially outer surface of the sheath (55).

5. The maintenance method according to claim 3 or 4, wherein the welding surface (67) and the matching welding surface (73) form a V-shaped groove (75) provided in the upper surface of the sheath (37) and in the upper surface of the casing (53).

6. The maintenance method according to claim 3 or 4, wherein the welding surface (67) is an annular zone of the upper surface of the casing (37) and the matching welding surface (73) is a zone of the radially outer surface of the sheath (55), a fillet weld being made during the step of creating the leak-tight welded connection (69).

7. The maintenance method according to claim 3 or 4, wherein the welding surface (67) is provided on a third lip (77) machined into the upper end of the casing (35), the matching welding surface (73) being provided on a fourth lip (79) carried by the upper sheath end (43), the third lip (77) and the fourth lip (79) together defining an omega-shaped seal (81).

8. The maintenance method according to any of claims 3 or 4, wherein a casing half-cavity (91) is hollowed out in a surface of the casing (21), and a sheath half-cavity (93) is hollowed out in a surface of the sheath (25), the casing half-cavity (91) and the sheath half-cavity (93) together defining a cavity (95) arranged along the welded connection (69), the welding surface (67) and the matching welding surface (73) forming a groove (85) emerging into the cavity (95).

9. The maintenance method according to claim 8, wherein the cavity (95) is arranged axially or radially below the welded seal (69).

10. The maintenance method according to any of claims 3 to 9, wherein a casing stress-relief groove (87) is provided in the upper surface of the casing (37), and/or a casing stress-relief groove (89) is provided in the upper surface of the casing (53).
